# EUROPEAN PATENT APPLICATION

(11) **EP 3 982 279 A1**
(43) Date of publication of application: **13.04.2022**
(21) Application number: 19950892.0
(22) Date of filing: 02.11.2019
(51) Int. Cl.: G06F 21/46

(54) **METHOD FOR FORCIBLY CHANGING A PASSWORD**

(71) Applicant: Gamania Digital Entertainment Co., Ltd., 11494 Taipei City (TW)
(72) Inventor: JUANG, Sam, Taipei City, Taiwan 11494 (CN)
(74) Representative: karo IP
(86) International application number: PCT/CN2019/115189
(87) International publication number: WO 2021/082023

(57) **Abstract**

The present invention relates to a method for forcible password change, a server register a user data and a first key, the user signs into a mobile application program according to the user data and the first key. When the login key is different from the first key, and the number of sign-ins exceeds a threshold, the server will stop the user data from signing into the mobile application; the server generates a second key and sends a notification message; a confirmation event is executed to the notification message; after execution of the confirmation event the server allows the user data and the second key to be used to open the mobile application. This method enhances the security of the user account. When it is stolen or possibly stolen, the password is quickly changed and reconfirmed to prevent the account from increasing the loss of theft.

## Description

### FIELD OF THE INVENTION

The present invention relates generally to a method for forcible password change, and more particularly to a method for forcible password change which uses a mobile application for sign-in confirmation.

### BACKGROUND OF INVENTION

As people rely more and more on the cloud and the Internet, more and more private information can be obtained through the Internet. Apparently, it is of great importance to enhance the security of personal accounts. Common methods to enhance account security include: regular backup of user data; using independent passwords; setting an email account or phone number for password recovery; using two-step verification; setting suspicious sign-in alert, and so son. However, based on the existing technology, there is still no way for the account to be locked out or for sign-in attempts from other devices to be stopped immediately. Therefore, how to ensure the security of their accounts has become a problem to be addressed urgently for ordinary users.

In addition, a wide variety of applications require different passwords for the accounts, or, some applications require regular change to the passwords of the accounts. In such a circumstance that a large number of account names and passwords need to be remembered, how to reduce the difficulty of users in memorizing passwords and bring convenience to users is also an important topic to be addressed.

Therefore, it is the aim of the present invention to develop an effective method to enhance the security of user accounts and passwords and to reduce the difficulty in memorizing a large number of passwords.

### SUMMARY OF THE INVENTION

The object of the invention is to provide a method for forcible password change, which can effectively prevent user account passwords from being stolen and improve security of accounts.

In order to accomplish the object mentioned above, the present invention provides a method for forcible password change, including a server with registration of a user data and a first key, the user data and first key being used to sign in to a mobile application. The detailed steps of the above method include: when a user data and a key is used to sign in to the mobile application, the sign-in key is different from the first key, and the number of sign-ins have exceeds a threshold, the server stops the user data from signing in to the mobile application; the server generates a second key and sends a notification message; a confirmation event is executed in response to the notification message; when the confirmation event is executed, the server allows the user data to open the mobile application using the second key.

In an embodiment of the present invention, the notification message is an SMS message or an email.

In an embodiment of the present invention, the confirmation event is a confirmation button interface or a biometric identification interface.

In an embodiment of the present invention, the threshold is a maximum of 10 sign-in.

In an embodiment of the present invention, before execution of a confirmation event for the notification message, the server will stop the user data and the first key, or the user data and the second key from signing in to the mobile application.

In order to achieve the above object, the present invention also provides a method for forcible password change, including a server with registration of a user data and a first key and a first location message generated by the server, the user data and the first key being used to sign in to a mobile application; upon sign-in to the mobile application, a second location message is generated, and if the server judges that the second location message and the first location message involve a distance that exceeds a threshold, the server stops the user data from signing in to the mobile application; the server generates a second key and sends a notification message; a confirmation event for the notification message is executed; when the confirmation event is executed, the server allows the user data and the second key to open the mobile application.

In an embodiment of the present invention, the notification message is an SMS message or an email.

In an embodiment of the present invention, the confirmation event is a confirmation button interface or a biometric identification interface.

In an embodiment of the present invention, the threshold is a maximum distance of 50 km.

In an embodiment of the present invention, before execution of a confirmation event for the notification message, the server will stop the user data and the first key, or the user data and the second key from signing in to the mobile application.

### BRIEF DESCRIPTION OF THE DRAWINGS

Fig.1 is a flow diagram of the method for forcible password change according to a first embodiment of the present invention;
Fig.2 is a flow diagram of the method for forcible password change according to a second embodiment of the present invention;
Fig.3 is a schematic view of the method for forcible password change; and
Fig.4 is a view showing the confirmation event in the method for forcible password according to the present invention.

### DETAILED DESCRIPTION OF THE INVENTION

The present invention is described in detail below with respect to specific embodiments for those skilled in the art to have a complete understanding of the aforementioned technical features and advantages of the present invention.

The present invention is a method for forcible password change, which, upon theft of a password of a user application account, can immediately replace the password with a new and more complex password and conduct verification, thus improving the security of the account password and reduce the risk of theft, following is a further description of the method for forcible password change according to the present invention:

### Embodiment 1, method for forcible password change

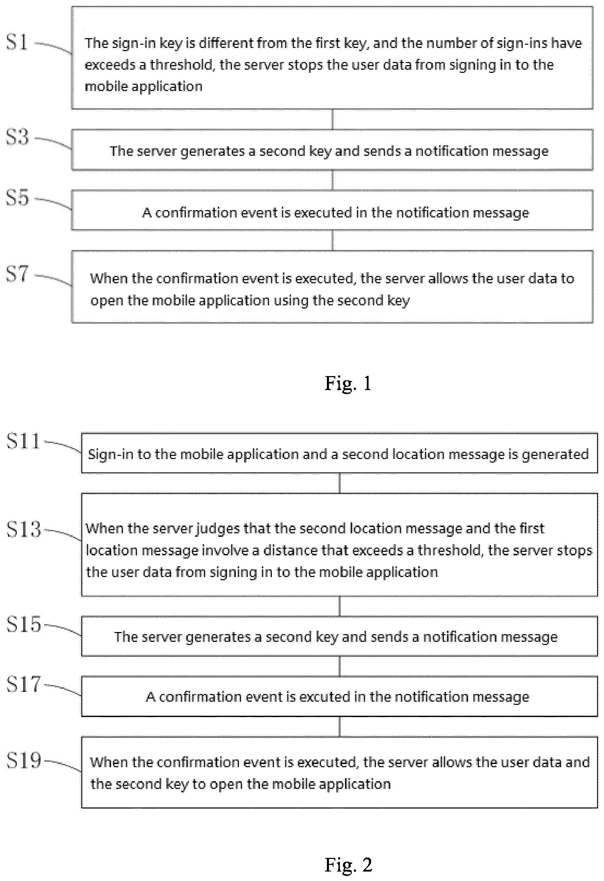

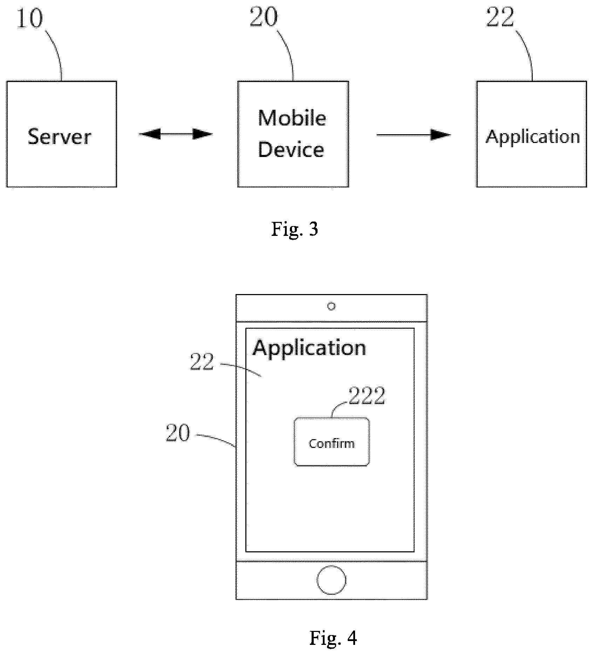

In a first embodiment of the present invention, see Fig. 1 and Fig. 3, users may use a mobile device (i.e., a portable device) 20 to register a user data and a first key on a server 10. The user signs in to a mobile application 22 based on the user data and the first key. The steps include:
S1: When the user data and a login key are used to sign in to a mobile application, the login key is different from the first key, and the number of sign-ins exceeds a threshold, the server will stop the user data from signing in to the mobile application;
S3: The server generates a second key and sends a notification message;
S5: A confirmation event is executed in response to the notification message;
S7: After execution of the confirmation event, the server allows the user data and the second key to be used to open the mobile application.

More specifically, first of all, the user registers the user data and the first key on the server 10 using the mobile device 20. Upon first-time registration on the server 10, the server 10 identifies the information of the mobile device 20 and records it as a device for recovery of the password. The device can be changed on the server 10. In the present embodiment, the device is the mobile device 20. For instance, the server 10 identifies the builtin machine type of the mobile device 20 or the SIM card code of the mobile device 20, and will send an SMS message or an mail only to this device during subsequent password retrieval. In the present embodiment, only an SMS message is sent to the mobile device 20.

Referring to Step S1, when the user data and a login key is used to sign in to the mobile application, the login key is different from the first key, and the number of sign-sins exceeds a threshold, the server will stop the user data from signing in to the mobile application. Specifically, a user signs in to the mobile application 22 based on the user data and a login key, the login key is different from the first key, and the number of sign-sins exceeds a threshold within a period of time, the server 10 will stop the user data from signing in to the mobile application; more specifically, if the login key is used frequently for more than 10 times within 5 minutes, the number of sign-ins exceeds the threshold, and the server 10 will stop the user data from signing in to the mobile application 22 The account is locked for protection of account information.

Referring to Step S3, the server 10 generates a second key and sends a notification message. Specifically, the server 10 generates a second key, the second key being different from the first key. The server 10 sends the notification message only to the recorded password retrieval device, in the present embodiment, only send to the mobile device 20. The user can set the most often used device as the password retrieval device, which, upon occurrence of user data theft, can immediately receive the notification message to know that the user data may be stolen or there are suspicious sign-ins.

Referring to Step S5, a confirmation event is executed in response to the notification message. Now reference is made to Fig. 4, which is a view showing the confirmation event in the method for forcible password change according to the present invention. As shown in Fig. 4, in this step, the mobile device 20 may open the confirmation event 222 of the mobile application 22 on the mobile device 20 based on the notification message, wherein, the confirmation event 222 is a confirmation button interface or a biometric identification interface. In the present embodiment, the confirmation button interface is taken as an example, but the present invention is not limited to this. The user only needs to click on the confirmation button interface of the mobile application 22.

Referring to Step S7, when the confirmation event is executed, the server 10 allows the user data and the second key to be used to open the mobile application. That is to say, when the confirmation event 222 is executed, the account is unlocked, and any mobile device can sign in to the mobile application 22 based on the user data and the second key. Also, for the convenience of the user, when signing in to the mobile application 22 on the mobile device 20, the second key need not to be input, saving the step to memorize the password and offering the user with more convenient user experience.

### Embodiment 2, method for forcible password change (the second method)

Fig. 2 and Fig. 3 show the flow diagram of a second embodiment of the method for forcible password change and depict the method for forcible password change according to the present invention. In the second embodiment, the user registers a user data and a first key on a server 10 using a mobile device 20 and generates a first location message. The user signs in to a mobile application 22 based on the user data and the first key. The detailed steps include:
S11: A second location message is generated upon signing in to the mobile application to;
S13: When the server judges that the second location message and the first location message involve a distance exceeding a threshold, the user data is stopped from signing in to the mobile application;
S15: The server generates a second key and sends a notification message;
S17: A confirmation event is executed in response to the notification message;
S19: When the confirmation event is executed, the server allows the user data and the second key to be used to open the mobile application.

The difference between the second embodiment and the first embodiment is in Steps S11 and S13, as hereinafter described. Referring to Step S11, a second location message is generated upon signing in to the mobile application 22. In this step, the location message is generated when any device signs in to the mobile application 22. In the present embodiment, the first location message and the second location message are based on a Geographic Information System (GIS), and the second location message is sent to the server 10 by each login device.

Referring to Step S11, when a second location message is generated upon signing in to the mobile application and the second location message and the first location messages involve a distance exceeding a threshold, the server will stop the user data from signing in to the mobile application. In this step, the server 10 records a first location message at the time of registration, and records a second location message upon signing in to the mobile application, and then compares it with the first location message. When the distance exceeds the threshold, the account is locked for protection of account information. Specifically, when the second location message and the first location message involve a distance exceeding 50 km, the server 10 will immediately stop the user data from signing in to the mobile application 22. The other steps of the present embodiment are the same as the first embodiment and are therefore not repeated herein.

To sum up, the method for forcible password change disclosed in the present invention requires verification of a confirmation event 222 on the mobile application 22. Any device and key cannot be used to sign in to the mobile application 22 until the confirmation event 222 is verified. And the server 10 only allows the mobile device 20 preset by the user to be used as the device to open the confirmation event 222. The user account cannot be recovered to its normal state until the confirmation event 222 is executed. Moreover, when signing in to the operation application 22 on this mobile device 20, the user needs not to input the second key, thus reducing the inconvenience to memorize the password, enhancing the security of user accounts, and effectively preventing further disclosure of information.

Described above are only preferred embodiments of the present invention and are not intending to limit the scope of implementation of the present invention. Therefore, any equal change or modification to the shape, structure, characteristics and spirit specified in the claims of the present invention shall be covered by the scope of the present invention.

## Claims

1. A method for forcible password change, including a server with registration of a user data and a first key, the user data and first key being used to sign in to a mobile application. The detailed steps of the above method include: when a user data and a key is used to sign in to the mobile application, the sign-in key is different from the first key, and the number of sign-ins have exceeds a threshold, the server stops the user data from signing in to the mobile application; the server generates a second key and sends a notification message; a confirmation event is executed in response to the notification message; when the confirmation event is executed, the server allows the user data to open the mobile application using the second key.

2. The method for forcible password change of Claim 1, wherein, the notification message is an SMS message or an email.

3. The method for forcible password change of Claim 1, wherein, the confirmation event is a confirmation button interface or a biometric identification interface.

4. The method for forcible password change of Claim 1, wherein, the threshold is a maximum of 10 sign-in.

5. The method for forcible password change of Claim 1, wherein, before execution of a confirmation event for the notification message, the server will stop the user data and the first key, or the user data and the second key from signing in to the mobile application.

6. A method for forcible password change, including a server with registration of a user data and a first key and a first location message generated by the server, the user data and the first key being used to sign in to a mobile application; upon sign-in to the mobile application, a second location message is generated, and if the server judges that the second location message and the first location message involve a distance that exceeds a threshold, the server stops the user data from signing in to the mobile application; the server generates a second key and sends a notification message; a confirmation event for the notification message is executed; when the confirmation event is executed, the server allows the user data and the second key to open the mobile application.

7. The method for forcible password change of Claim 6, wherein, the notification message is an SNS message or an email.

8. The method for forcible password change of Claim 6, wherein, the confirmation event is a confirmation button interface or a biometric identification interface.

9. The method for forcible password change of Claim 6, wherein, the threshold is a maximum distance of 50 km.

10. The method for forcible password change of Claim 6, wherein, before execution of a confirmation event for the notification message, the server will stop the user data and the first key, or the user data and the second key from signing in to the mobile application.
